# EUROPEAN PATENT SPECIFICATION

(11) **EP 3 176 446 B1**
(45) Date of publication and mention of the grant of the patent: **22.04.2020**
(21) Application number: 16201878.2
(22) Date of filing: 02.12.2016
(51) Int. Cl.: F16B 12/00, F16B 37/12, F16B 12/30

(54) **SYSTEM AND METHOD FOR ASSEMBLING ELEMENTS TOGETHER USING THREADED MALE AND FEMALE ELEMENTS**
SYSTEM UND VERFAHREN ZUM ZUSAMMENBAU VON ELEMENTEN MIT AUSSENGEWINDE- UND INNENGEWINDEELEMENTEN
SYSTÈME ET PROCÉDÉ D'ASSEMBLAGE D'ÉLÉMENTS LES UNS AUX AUTRES AU MOYEN D'ÉLÉMENTS MÂLES ET FEMELLES FILETÉS

(30) Priority: 02.12.2015 NO 20151650
(43) Date of publication of application: 07.06.2017
(73) Proprietor: Digernes, Vemund, 1482 Nittedal (NO); Digernes, Sjur, 1482 Nittedal (NO)
(72) Inventor: Digernes, Vemund, 1482 Nittedal (NO)
(74) Representative: Acapo AS

(56) References cited:
- EP-A2- 2 375 088
- WO-A1-96/22442
- WO-A1-2010/136135
- NO-A1- 20 092 781

## Description

### Technical Field of the Invention

The present invention relates to a system and a method for assembling a first element and a second element using threaded male and female parts, comprising a pin with male threads; a part intended to be arranged in a hole extending through the second element, the part being provided with a hole with an inner surface extending through the part, the inner surface being provided with female threads; and a plug shaped unit provided with a hole with an inner surface provided with female threads and an outer surface provided with male threads wherein the first element is provided with an end fixture and an end of the pin is configured with an end part intended to be fixed in the end fixture of the first element. The plug shaped unit is provided with a hole extending through the entire unit, and the female threads on the inner surface of the hole through the plug shaped unit and the male threads on the exterior surface of the plug shaped unit have different pitch.

The invention relates also to use of such system for assembling element, for example elements for furniture \or indoors furnishing.

### Background for the Invention

Often furniture and cabinets for kitchen, bathrooms etc. are delivered flat packed, leaving the assembling process to the customer. Such furniture or cabinets consist often of units made of wood or wooden chipboard, fixed together by bolts and nuts and/or screws.

Threaded fasteners, such as screws and bolts, serve multiple purposes and are in widespread use. While existing variations of design and application are abound, new materials, requirements and new demands are spurring further innovation and development in this field.

When assembling two or more objects in a fixed and stable manner, bolts and/or screws are applied, such screws and bolts being fitted into pre-drilled bores for fixing the object together by an inserted nut like body and or screws, screwed into wooden material. It has been experienced, however, that under certain circumstances, the fixing becomes loosened.

WO 90/04695 describes an adjustable fastener for joining two structural elements which consist of a door or a window sash and a surrounding stationary building structure. The fastener comprises an externally threaded stem and a head which is polygonal. The fastener has a through hole in its longitudinal direction, which at least is in the lower portion of the stem, is also polygonal. Head is provided with a stop for a screw head and the underside of the head is provided with one or more cutting edges.

GB 1533252 describes a fitting for detachable connecting two walls of an item of furniture to one another, comprising a headed pin member securable in one of the walls, an insert member locatable in the other wall, the insert member having an internal bore capable, in use, of receiving the head of the pin member. A tensioning member is journaled to rotate within the insert member without axial displacement, the tensioning member defining a cam surface capable of co-operating, in use, with the head of the pin member when the tensioning member is rotated, such cooperation urging the head of the pin member further into the bore. The tensioning device has end faces extending normally to the axis of rotation and one end face is provided with a tool receiving slot.

NO 334359 describes an arrangement for assembling and fixing elements together, consisting of three main parts: a central pin with male threads arranged on the outer surface; a sleeve with a hole with female threads; an intermediate body intended to be screwed in between the central pin and the sleeve, the intermediate part having female threads corresponding to the male threads on the pin and male thread corresponding to the female threads inside the sleeve.

US 4,984,946 discloses a blind fastener and method for making such fastener. The blind fastener has a flanged outer sleeve and a flanged inner sleeve that are secured together, wherein the outer sleeve has a socket that receives a lug from the inner sleeve to provide joint axial movement and wherein the outer sleeve has a plurality of slits that receives at least one radial projection from the inner sleeve to prevent rotation between sleeves. The inner sleeve has a thinner upper portion and a thicker lower portion with a score line therebetween to facilitate the separation of this portion. The inner sleeve has a central threaded bore to receive a threaded bolt for fastening purposes and to upset the outer sleeve relative to the flanged portion thereof to secure such fastener to a thin workpiece.

EP 2 375 088 describes a fixing device for making a strong connection between to work pieces in the form of housing elements of a turbo machine. The device is designed to cater for thermal loads caused by high temperatures, and comprises a bolt with threaded ends and a non-threaded midsection intended to elongate or contract when subject to thermal loads. A pipe nut is in threaded connection with the bolt and one of the elements to be connected, the pipe nut having an outer thread designed with clearance to accommodate the elongation of the bolt.

WO2010/136135 describes a system of binding or assembling by means of a double-threaded bolt that is coupled to a respective nut that incorporates concentric male and female threads. The purpose is to make installation easy and increasing the scale of situations to which it is applicable.

WO 1996/022442 concerns a fastener device for adjustably fitting a frame in a wall opening.

When assembling for example wooden furniture, or structure made of wood or wooden chipboard, there is a need for a rigid and locked fixture preventing relative movement between the units to be assembled and at the same time providing a rigid, permanent assembly that may be unlocked in a controlled manner.

### Summary of the Invention

The main purpose of this invention is to increase or reduce the contact forces between two adjacent element surfaces to be jointed by increasing or reducing the axial tension in an interconnecting bolt or pin inside a bore or hole without necessarily having to rotate the bolt or pin. The principle used is to create a change of axial tension in the bolt or the pin, locked with one end in a first body to be assembled, by creating relative axial movement between the pin or bolt on the one hand and a differential sleeve shaped thread connector due to difference in pitch between the male threads on the bolt and the complementary female threads in a hole through the differential thread connector arranged in a threaded hole through another element body to be assembled on the other hand and a different pitch of the externally arranged male threads of the outer surface of the differential thread connector on the other side. Because of such pitch difference, the displacement in axial direction of the bolt through the threaded hole with female threads through the differential thread connector will differ from the displacement in axial direction of the differential thread connector. If the pitch P₁ of the female threads of the hole through the differential thread connector and consequently the pitch of the male threads of the pin or bolt is larger than the pitch P₂ of the male threads on the exterior surface of the differential thread connector, then tension will be achieved by screwing the differential thread connector inwards in axial direction into the hole. With a pitch P₁ smaller than P₂, an outward movement of the differential thread connector is required in order to obtain the required tensional change.

The dead anchor or end fixture is defined as a locking point which prevents unintentional axial movement of the bolt or pin locked in the locking point. The end fixture may be in the form of a threaded hole for receipt of a threaded end of a bolt or a pin or a hole with surrounding walls capable for retaining an end of the bolt or pin with cutting threads, cutting into the surrounding material, maintaining said end in a locked position.

One way of achieving intended effect is to use different bodies and different devices with a combination of male and female threads partly with different diameters and thread pitch.

According to one exemplified embodiment, the system comprises different bodies for fixing objects together, such as: i) a first hollow sleeve intended to be embedded and locked against rotation in a first object, the sleeve being provided with female threads with a first pitch; ii) a second hollow sleeve intended to be embedded into a second object and with female threads having a different pitch than the pitch of the first sleeve; iii) a third hollow sleeve with male threads with a pitch and diameter corresponding to the diameter and female threads of the second embedded hollow sleeve, fixed in the second object and with a hole with diameter and female threads corresponding to the diameter and female threads of the first hollow embedded sleeve; and iv) a pin with diameter and threads corresponding to the diameter and female threads of the first embedded sleeve and the diameter and female threads of the third sleeve, said third sleeve being configured to be screwed into the opening of the second embedded sleeve.

According to another exemplified embodiment the item i), i.e. the fixation in the first object may be in the form of an end fixture fixing the pin according to iv) against axial displacement, while the remaining part of the pin corresponding to the pin described above.

The present invention addresses recognised weaknesses and challenges linked to prior art threaded fasteners, namely those linked to: (a) optimal tension (clamping force); (b) stability; and (c) prevention of self-loosening in elements of composites, sandwich-elements, and wood and wood-based products. The intended application of the system is limited to fasteners enabling repeated assembly and disassembly of elements. Failures of the prior art threaded fasteners in such applications are often linked to instability, loosening, loss of pretension, and crushing of material surface due to high load or clamping force.

An object of the present invention is to provide an affixing device providing a rigid and stable fixture between two elements to be assembled.

Another object of the present invention is to provide a fixture preventing relative movement between the elements to be assembled.

Another object of the invention is to provide a reliable fixation system that maintains the locking effect until the locking effect is suspended by unscrewing the system.

The objects according to the invention are achieved by a system and a method as further defined by the independent claim, while embodiments alternatives, variations, modifications and options are defined by the dependent claims.

The system for assembling a first element and a second element using threaded male and female parts may comprise a pin with male threads; a part intended to be arranged in a hole extending through the second element, the part being provided with a hole with an inner surface extending through the part, the inner surface being provided with female threads; and a plug shaped unit provided with a hole with an inner surface provided with female threads and an outer surface provided with male threads. The first element may be provided with an end fixture; an end of the pin may be configured with an end part intended to be fixed in the end fixture of the first element; the plug shaped unit being provided with a hole extending through the entire unit and the female threads on inner surface of the hole through the plug shaped unit and the male threads on the exterior surface of the adjustable device have different pitch.

According to the invention the end fixture in the first element comprises a first sleeve configured to be fixedly mounted in a first element, the first sleeve being provided with a hole with female threads for receipt of the pin with the male threads, the first fixture serving as a locking fixture.

The part intended to be arranged in the hole in the second element may comprises a second sleeve to be fixedly mounted in the hole through the second element, preventing rotation, the second sleeve being provided with a hole extending through its entire length, the surface of the hole through the second sleeve being provided with female threads, configured for rotatable interaction a surface of interaction with the plug shaped unit through a threaded connection.

According to the present invention it may be provided a system for assembling elements together using threaded male elements and threaded female elements, comprising a part intended to be embedded and locked into a body of a material, such as a composite material, wood or material formed by a wooden material or metal. The system comprises:
- an end fixture arranged in a first element to be jointed,
- a rod fixed with one end by the end fixture or dead anchor by means of a fixing or locking device,
- a hole with inner female threads in a second element to be jointed,
- an adjustable device with external male threads suited to the female threads on the inner surface of the hole in the element to be jointed, and
- a device for locking an opposite end of the rod.

According to an embodiment of the invention, the system comprises:
- a first sleeve configured to be fixedly mounted in a hole in a first object to be assembled, the first sleeve being provided with a hole for receipt of a locking fixture, the surface of the hole being provided with a surface of interaction with a first locking device;
- a second sleeve to be mounted in a hole through a second body to be assembled with the first body, the second sleeve being provided with a hole extending through its entire length, the surface of the hole through the second sleeve being provided with a surface of interaction with a second locking device ,
- a third sleeve body, i.e. a differential thread connector functioning as a tensioning and locking device, to be mounted inside the second sleeve, the third body being provided with an outer surface to be in adjustable fixture with the inner surface of the second sleeve and with a hole extending through its entre length, the hole being configured to receive a body with male threads. and
- a body intended to extend through the third sleeve and into the first sleeve body and to be in engagement with the inner surface of both the hole in in the first sleeve in the first body in the first object to be assembled and the inner surface of the third sleeve.

According to one embodiment the surfaces of interaction is provided with threads. Moreover, the diameter of the hole through the first sleeve is different from the diameter through the hole through the second sleeve while the outer diameter of the third sleeve corresponds to the diameter of the hole through the second sleeve.

The diameter of the hole through the first sleeve correspond to the diameter of the hole through the third sleeve and to the diameter of the forth body. The pitch of the threads in the hole through the second sleeve is different from the pitch of the threads in the hole through the first sleeve.

According to one option, the pitch of the threads in the hole through the second sleeve corresponds to the pitch on threads arranged around the third sleeve, while the pitch through the hole through the third sleeve corresponds to the threads through the hole through the first sleeve and external threads on the fourth body.

The length of the third sleeve may be smaller than the length of the second sleeve, while the length of the fourth body may exceed the length of the second sleeve.

According to another embodiment of the invention, the outer surface of the first and/or second sleeve is provided with threads or fins or the like for forming a fixture of said sleeve(s) within the objects in which they are intended to be mounted, thereby preventing rotation of said sleeve(s) within the hole.

The hole or bore for the first sleeve may be a blind hole or the hole may extend through the entire object in which it is made.

According to the present invention the system may be used for fixing in a locked manner two or more elements together, where the fist sleeve is mounted in one of said elements and the second sleeve is mounted in a second element, the second element being provided with a hole extending through the entire element.

According to the present invention, it is also provided a method for establishing a fixed and rigid joint between structural elements at least partly obtained by means of threaded connections, where at least one of the objects to be jointed is provided with a threaded hole. According to the method an end fixture is established in one element to jointed, fixing one end of a rod in the end fixture, having a hole through a corresponding element to be adjoined, establishing a fixed connection inside the hole extending through the element to be jointed, establishing an adjustable connection device with the opposite end of the rod and moving the connection device in a direction introducing tension in the rod.

According to one embodiment, the connection device is in the form of a sleeve body with external, male threads configured to co-function with corresponding internal female threads on the inner surface of the hole, providing a fixture of the rod end and screwing the fixture in the appropriate direction.

The invention facilitates the use of threaded inserts as embedded fixing points in elements to be fastened. Such fixed threaded inserts are often custom-made for specific materials and applications, thus achieving the optimal stability and distribution of load. As described in more detail below, the invention enables a stable and preloaded threaded connection between two fixed threaded inserts. This is a novel quality which makes possible the fastening of elements without the use of bolts and nuts.

The rotary movements of the fastener takes place entirely in an internal compartment. There is therefore no rotary friction between fastener and the surface of the elements to be fastened, which makes the torque/tension ratio more predictable and minimizes the risk of friction damage to gaskets and surfaces. The invention inherits additional features that may be exploited in designs and applications. For example, fasteners based on the invention can be sunk or semi-hidden into the elements to be connected. The invention is also suited to make use of internal threads directly cut into solid elements such as metals and hard plastics.

NO 334359 describes a differential thread connector with a connector function. A connector connects a threaded bolt (male threads) and a threaded insert (female threads). When the insert is attached to the bolt by means of the connector, some free linear movement of either insert or bolt is then essential for the connector to achieve the necessary "hold". For the same reason, if both bolt and insert are fixed in the respective elements, the elements must be some distance apart when the operation starts. This prerequisite in an obstacle to various applications; it both limits the possibility of pre-placement of elements before fastening and makes impossible fastening of elements by means of multiple fasteners using fixed inserts in both elements.

The present invention resolves these limitations by means of a technical modification that also enables added performance.

The threaded bolt is replaced by a threaded rod that can be installed (threaded) through the connector and into an embedded threaded insert. This operation can be performed when the elements are in the desired position and the connector installed in the second threaded insert. For this purpose the connector is open at both ends. The connection is then tightened, producing the necessary clamping force by rotating the connector.

### Short Description of the Drawings

An embodiment of the present invention shall now be described in further detail referring to the drawings, wherein:
Figure 1 discloses a prior art solution comprising three parts in the form of a threaded bolt or screw, an insert and a connector;
Figure 2 shows schematically one embodiment of a fixation device according to the present invention, for example suitable to be used in association with multiple fixing points;
Figure 3 shows schematically the function of one embodiment of the present invention, showing a possible first step in the process of assembling and disassembling two objects;
Figure 4 shows schematically a next step in the assembling process where the third sleeve is screwed into the second sleeve;
Figure 5 shows schematically a third step in the assembling process where the threaded pin is screwed into the third sleeve and moreover into the fist sleeve of the first body;
Figure 6 shows schematically a stage where the third sleeve has been screwed in, tightening up the joint between the first and second element;
Figure 7 shows schematically an embodiment, showing the system used in association with a corner block; and
Figure 8 shows schematically another possible embodiment, showing the system used for assembling wooden beams.

### Detailed Description of Embodiments of the Invention

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology, method, and structure of a threaded fastener system, used for example for assembling and fixing elements, for example of composites, sandwich-built elements and wood and wood-based products. However, the embodiments to be discussed next are not limited to such type of products, but to any type of assembling and fixing together structures to be assembled in a rigid manner. In the following, the invention shall be described in respect of assembling and fixing elements made of a composite material.

Reference throughout the specification to "one embodiment" or "an embody-ment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

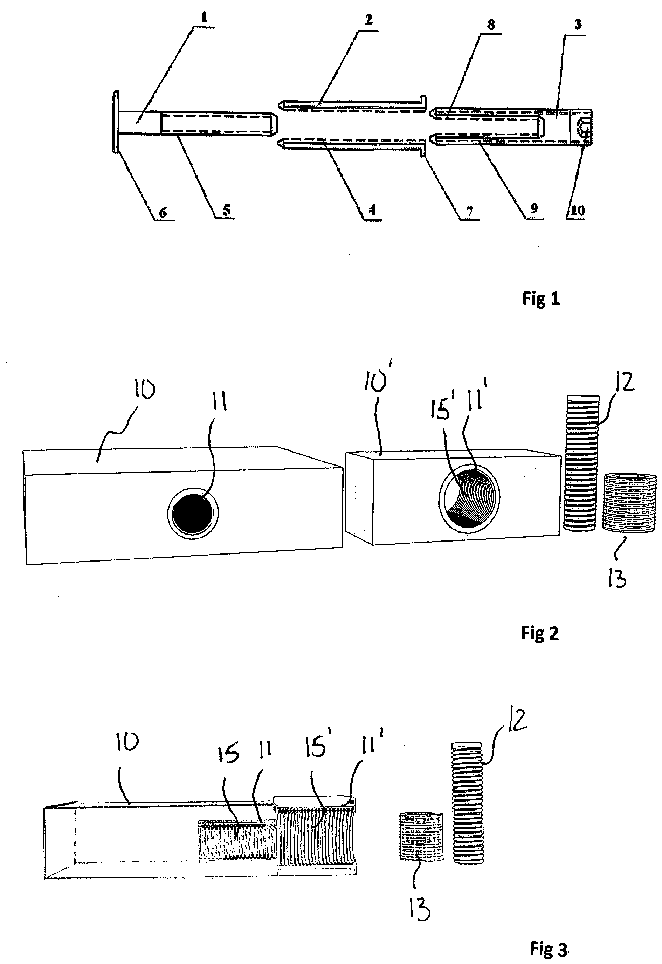

Figure 1 discloses a prior art solution belonging to the applicant, comprising three parts in the form of a threaded bolt or screw 1, a sleeved insert 2 and a connector 3.The threaded bolt or screw 1 is provided with male threads 5 arranged on its surface, the threads having a first pitch. For example the male threads may be of a type M6x1. Moreover the screw 1 is also provided with an end flange 6 and possible a manipulation means for enabling screwing, arranged at the end surface of the end flange. 6. The opposite end may be tapered in order to enhance entering of the screw 1 during assembling.

The insert 2 has a bore extending through the entire insert 2, the bore being provided with female threads 4 along its entire length, the threads 4 having a second pitch. For example the threads may be of a type M10x0.75. At one end the insert 2 may be provided with an end flange 7, extending laterally out from the insert 2, while the opposite end surface may be tapered. The second pitch of the female threads 4 is different from the pitch of the male threads of the screw 1. The internal diameter of the bore through the insert 2 is larger than the outer diameter of the screw 1.

A differential thread connector 3 is provided with a hexagonal hole or recess for receipt of a screw device 10, such as an Umbraco™ key, for rotating the differential thread connector 3 during assembling. The differential thread connector 3 is provided with a threaded blind hole with female threads 8, for example M6x1, i.e. diameter of 6 mm and a 1 mm pitch, and with externally arranged male threads 9, for example M10,0.75, i.e. a 10 ,, diameter and a 0.75 mm pitch. The female threads of the thread connector 3 are configured to adapt to the male threads 5 of the bolt or screw 1, while the male threads of the differential threads connector 3 are configured to be adapted to the female threads 4 of the sleeve insert 2.

The function of the prior art system disclosed in Figure 1 is as follows: The differential thread connector 3 is screwed into the hole with female threads extending through the insert 2 and is intended to be brought in engagement with threaded end of the bolt 1. To this respect the external diameter and pitch of the differential thread connector 3 correspond to and are adapted to the female diameter and pitch of the threads of the bore of the insert 2, while the diameter and pitch of the female threads of the differential thread connector 3 correspond to and are adapted to the diameter and male threads of the screw 1. When continued turning of the connector 3 the distance between the flanges 6,7 is reduced and a bolted connection and fixture with a required clamping force is obtained.

The system disclosed in Figure 1 is suitable for example when two different plates or sections are to be connected. In such case the insert is inserted into a coaxial hole through the two plates whereupon the differentiate thread connector 3 is inserted at one end of the insert 2, while the bolt or screw 1 is inserted and screwed into the opposite end of the insert 2 and into the hole with female threads in the differential thread connector 3 until the inner end of the differential thread connector 3 comes in contact with the inserted end of the screw or bolt 1. Further screwing of the bolt 1 and/or the differential thread connector 3 will eventually result in the required clamping effect.

Figure 2 shows schematically one embodiment of the present invention showing the system used for assembling wooden beams or composite elements or metal elements, for example suitable to be used in association with multiple fixing points. In the Figure, two elements 10,10' are disclosed, the elements 10,10' may for example be side panels of two book shelves to be interconnected. It should be appreciated that for simplicity only a small part of each panels are disclosed.

A key element of the invention is a "differential thread connector" 13 that enables a corresponding threaded connection between threaded inserts of unequal diameter and pitch. The connector converts rotary motion to linear clamping motion and clamping force/tension in a pin or bolt 12.

According to the present invention, the system comprises four different units, two insert units 11,11', configured to be in a position in a unit 10,10' to be jointed, the external surface of the units 11,11' being provided with external locking surface(s) (not shown), locking the units 11,11' to the elements 10,10', preventing rotation when embedded or positioned inside said elements 10,10'. According to one embodiment the external surface of the insert units 11,11' may be provided with beads, fins, bulbs, longitudinal ribs, protrusions or the like, extending out beyond the remaining surface of the external surface of the insert units 11,11'. Alternatively, the outer surface of the insert units 11,11' may be provided with threads with a cutting edge and large pitch, such as threaded surface for a wooden screw type of threads. The insert units 11,11' may either be embedded in an element 10,10', or pressed, forced or screwed into a pre-drilled hole in the element 10,10'. The insert unit 11, intended to be fixed inside element 10 may be provided with a bore which may constitute a blind hole or a bore that extends through the entire length of the insert unit 11. The hole or bore in the insert 11 may have a diameter of D₁ and provided with internally arranged female threads 15 with a pitch P₁. The insert unit 11' in the second element 10' is provided with a bore extending through the entire second element 10'. The second insert 11' is fixed inside the bore or hole, the hole through the second unit 10' being provided with a diameter D₂ and with internal female threads 15 with a pitch P₂ The length of the second insert unit 11' should preferably, but not necessarily, be shorter than the length of the hole through the element 10' to be jointed. If the length is larger than the depth of the hole through the second element 10', a portion of the second insert unit 11' may extend out from the surface of the element 11'. Such outwards extending portion may serve other functions than a jointing function, e.g. as a spacer between elements.

Moreover, the system also comprises a threaded bolt or a screw 12. The bolt 12 may at one end be provided with hexagonal hole or recess for receipt of a screw device 10, such as an Umbraco™ key (not shown). Alternatively or in addition, the end may be provided with a diagonally arranged recess configured to receive the end of a screw driver or the like for screwing the bolt in or out. The bolt 12 has a diameter D₁ and the male treads 15' has a pitch P₁. The length of the bolt 12 should preferably exceed the length of the bore through the second element 10' to be assembled.

In addition the system comprises a differential thread connector 13. The differential thread connector 13 has an external diameter D₂ and is provided with externally arranged male threads 15' with a pitch P₂. Moreover, the differential thread connector 13 is also provided with a bore extending through the connector 13. The bore is given a diameter D₁ and is provided with female threads with a pitch P₁. The length of the differential thread connector 13 should preferably be shorter than the length of the insert unit 11'. At one end, i.e. the end intended to face the accessible surface of the element 10' to be jointed, is provided with a hexagonal hole or recess for receipt of a manipulating screw device 10, such as an Umbraco™ key and/or with a diagonally arranged slot for receiving the end of a screw driver.

As such the inserts 11,11' may be of any commercially available type or tailor made and purpose fabricated, suitable to serve the intended used and meet the required functions. The various units of the system may be made of metal and/or plastic material without deviating from the inventive concept.

As indicated above the insert unit 10, i.e. the end insert unit, may be provided with a threaded blind hole or a threaded hole extending through the entire unit 11, while the insert 11', i.e. the insert unit 11' to be fixed in the element 10' to be jointed with the first element 10, should have a threaded hole extending through the entire insert unit 11', allowing the screw or bolt 12 to extend through the element 11' and into the threaded hole of the first element 10.

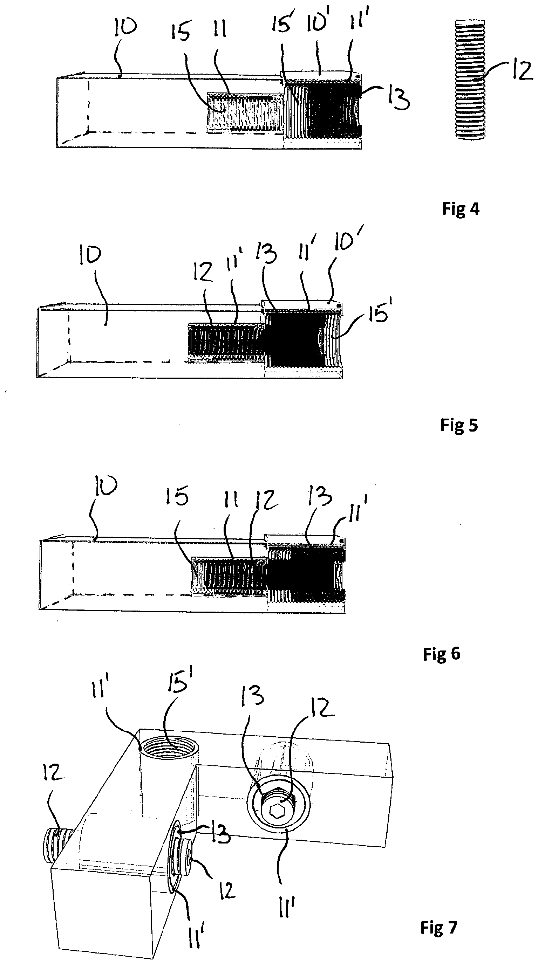

Figure 3 to 6 show schematically the function of one embodiment of the present invention, showing the various stages in the process of assembling and disassembling two elements 10,10'. Figure 3 shows schematically a first step in the process of jointing the two elements 10,10'. As indicated, the inserts 11,11' have been embedded or screwed into the first and second element 10,10' respectively. The two elements 10,10' are then positioned so that the centreline of each of the inserts 11,11' are aligned in a concentric and coaxial manner. At this stage, as shown in Figure 4, or prior to bringing the two elements into a concentric and coaxial alignment, the differential thread connector 3 may be screwed into the threaded hole of the second insert unit 11' by using the Umbraco™ key or the screw driver as the case may be. According to the embodiment shown in Figure 4, the inner end of the differential threads connector 13 is screwed nearly to the inner end of the second insert unit 11'. As indicated in Figure 5, the threaded rod or bolt 12 is now inserted into and screwed through differential thread connector 13 which previously has been screwed into the second insert unit 11' and then into the first insert unit 11 in the first element 10, by using an Umbraco™ key inserted in the hexagonal recess in the end of the bolt or pin 12, thus establishing a semi-rigid fixture or joint where the two elements 10,10' still to a certain, although limited degree may be moved relative to each other. At this stage, as indicated in Figure 6, the joint between the two elements 10,10' may be tightened and made rigid by positioning an Umbraco™ key in the hexagonal recess in the head of the differential thread connector 13 and seeking to screw the differential thread connector, intending to screw the differential thread connector 13 inwards, thereby tension in the bolt or screw 11 tending to pull the two elements 10,10' towards each other and creating a rigid and locked fixture between the two elements 10,10'. In this state a post-tensioned bolt fixture is established, tending to draw the first element 10 in a direction towards the adjoining surface of the second element 10'. Due to the difference in pitch between the female threads inside the central bore of the differential thread connector 13 and the male threads on the exterior surface of the differential thread connector 13, such difference will when rotating the differential thread connector 13 cause an axial tension in the rod 12, the axial movement or displacement of the differential thread connector 13 will be different from the axial movement or displacement of the rod 12, this imposing a tension in the rod 12, and consequently the locking effect between the two bodies 10,10' to be fixed. With a pitch P₁ larger than P₂ as in accordance with the embodiment shown in Figures 3 to 6, the tension is achieved with an inward movement of the connector 13. With a Pitch P₁ smaller than P₂, an outward movement of the connector 13 is required.

Figure 7 shows schematically an embodiment, showing the system used in association with a corner block 16 for built-up, installation, support or repair for example furniture boards, assembling cabinets for a kitchen, fixing cabinets to a wall, etc. For such purposes the corner blocks 16 may for example be made of a plastic material, wood or metal. At predetermined positions, the corner blocks 16 may be provided with embedded inserts 11' with threaded holes bored out and cut through the block for two-sided or three-sided corner block 16. The threaded holes have a diameter and female threads with a pitch corresponding to the diameter and the male thread pitch of the corresponding differential thread connector 13 intended to be screwed into the hole(s) of the corner blocks 16.

The sleeves 11' are embedded in the corner block during manufacturing of the corner block 16. Alternatively holes may be drilled and the sleeves 11' may be screwed into the hole. The differential thread connectors 13 are then installed in the sleeve(s) 11', the threaded rods or bolts 12 are installed through the connectors 13 and connect with a first sleeve 11 or fixture in the boards 10 to be jointed. These sleeves 10 or fixtures may be preinstalled inserts 11 in the board 10, or pressed-in through or screwed into drilled holes in the boards 10. The differential thread connectors 13 are the finally screwed in direction outwards so as to increase the tensing in the threaded bolt(s) 12 and thus increasing the contact pressure between the two surfaces to be jointed. The outwards movement of the differential thread connector 13 may be achieved by a tightening movement using a hexagonal key in the hexagonal recess on the end of the differential thread connectors 13.

It should be noted that elements may be fixed together by using a multiple number of fixing points.

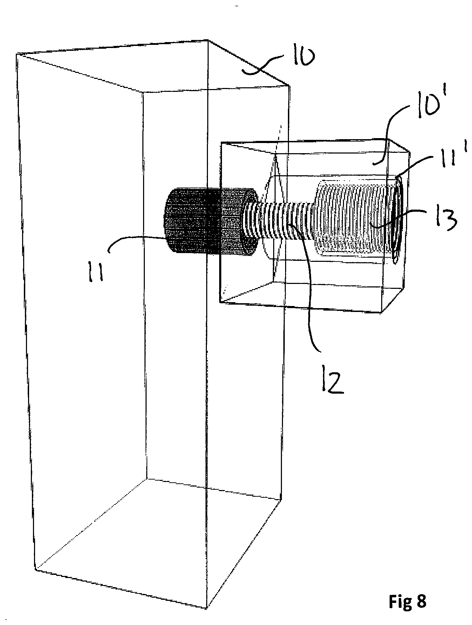

Figure 8 shows schematically an embodiment of the invention where the system is used for fixing a wooden beam to another using a threaded insert system according to the present invention. The corresponding dimensions and length of the threaded rod 12 can be modified according to the required specifications. Installation of custom made inserts 11,11' for wood, installation of differential thread connector 13 and threaded rod 12, and tightening of connection as described above, ref. Figure 3. This connection can be sunk into the beams for low visibility and fire protection.

## Claims

1. System for assembling a first element (10) and a second element (10') using threaded male and female parts, comprising a pin (12) with male threads; a part (11') intended to be arranged in a hole extending through the second element (10'), the part (11') being provided with a hole with an inner surface extending through the part (11'), the inner surface being provided with female threads; and a plug shaped unit (13) provided with a hole with an inner surface provided with female threads and an outer surface provided with male threads, wherein the first element (10) is provided with an end fixture (11); that an end of the pin (12) is configured with an end part intended to be fixed in the end fixture (11') of the first element (10); the plug shaped unit (13) being provided with a hole extending through the entire unit (13) and where the female threads on inner surface of the hole through the plug shaped unit (13) and the male threads on the exterior surface of the adjustable device (13) have different pitch,
**characterized in that** the end fixture in the first element (10) comprises a first sleeve (11) configured to be fixedly mounted in a first element (10), the first sleeve (11) being provided with a hole with female threads for receipt of the pin (12) with the male threads, the first fixture serving as a locking fixture.

2. System according to claim 1, wherein the part (11') intended to be arranged in the hole in the second element (10') comprises a second sleeve to be fixedly mounted in the hole through the second element, preventing rotation, the second sleeve being provided with a hole extending through its entire length, the surface of the hole through the second sleeve being provided with female threads, configured for rotatable interaction a surface of interaction with the plug shaped unit(13) through a threaded connection.

3. System according to claim 1 or 2, wherein the diameter of the hole through the first sleeve (11) is different from the diameter through the hole through the second sleeve (11') while the outer diameter of the plug shaped unit (13) corresponds to the diameter of the hole through the second sleeve (11').

4. System according to any one of the claims 1 to 3, wherein the diameter of the hole through the first sleeve (11) correspond to the diameter of the hole through the plug shaped unit (13) and the pin (12).

5. System according to any one of the claims 1 to 4, wherein the pitch of the female threads in the hole through the second sleeve (11') is different from the pitch of the female threads in the hole of the first sleeve (11).

6. System according to any one of the claims 1 to 5, wherein the pitch of the threads in the hole through the second sleeve (11') corresponds to the pitch of the male threads on the exterior surface of the plug shaped unit (13), while the pitch of the female threads in the hole through the plug shaped unit (13) corresponds to the female threads of the hole in the first sleeve (11) and external threads on the pin (12).

7. System according to any one of the claims 1 to 6, wherein the length of the plug shaped unit (13) is smaller than the length of the second sleeve (11').

8. System according to any one of the claims 1 to 7, wherein the length of the pin (12) exceeds the length of the second sleeve (11').

9. System according to any one of the claims 1 to 8, wherein the outer surface of the first and/or second sleeve is provided with threads or fins or the like for forming a fixture of said sleeve(s) within the objects in which they are intended to be mounted, thereby preventing rotation of said sleeve(s) within the hole.

10. System according to any one of the claims 1 to 9, wherein the hole or bore for the first sleeve may be a blind hole.

11. Use of a system as disclosed in any one of the claims 1 to 10, wherein the system is used for fixing in a locked manner two or more elements together, where the first sleeve is mounted in one of said elements and the second sleeve is mounted in a second element, the second element being provided with a hole extending through the entire element.

12. Method for adjoining a first element (10) and a second element (10') by means of threaded connections using threaded male and female parts, comprising parts (11,11') intended to be embedded into the elements (10,10'), where at least one of the elements (10,10') to be jointed is provided with a hole,
***characterized by***
- *arranging* a sleeve (11) with a hole with female threads in a hole in the first element (10) to jointed;
- arranging a sleeve (11') with a hole with female threads in a hole in the second element (10');
- screwing a plug shaped unit (13) with male threads into the sleeve (11'), the plug shaped unit (13) also being provided with a hole with female threads;
- using a rod (12) with male threads corresponding to the female threads of the sleeve (11) and the female threads of the plug shaped unit (13);
- giving the female threads of the plug shaped unit (13) and hence the male threads of the rod (12) a different pitch than the male threads on the plug shaped unit (13) and hence the female threads of the sleeve (11'); and
- establishing a threaded connection by means of the rod (12) screwed through the hole with female threads of the plug shaped unit (13) and into the sleeve (11);
whereupon an adjustable connection between the first element (10) and the second element (10') is established by screwing the rod (12) and/or the adjustment the rod (12) and/or the plug shaped unit (13) in a direction introducing tension in the rod (12).

## Patentansprüche

1. System zum Zusammenbau eines ersten Elements (10) und eines zweiten Elements (10') mittels Außengewinde- und Innengewindeelementen, umfassend einen Bolzen (12) mit einem Außengewinde; ein Teil (11'), das dazu vorgesehen ist, in einer Öffnung angeordnet zu werden, die sich durch das zweite Element (10') erstreckt, wobei das Teil (11') mit einer Öffnung versehen ist, die eine innere Fläche aufweist, die sich durch das Teil (11') hindurch erstreckt, wobei die innere Fläche mit einem Innengewinde versehen ist; und ein stopfenförmiges Element (13), das mit einer Öffnung mit einer inneren Fläche, die mit einem Innengewinde versehen ist, und mit einer äußeren Fläche, die mit einen Außengewinde versehen ist, ausgestattet ist, wobei das erste Element (10) mit einer Endhalterung (11) ausgerüstet ist; wobei ein Ende des Bolzens (12) mit einem Endteil ausgebildet ist, der dazu vorgesehen ist, in der Endhalterung (11') des ersten Elements (10) befestigt zu werden; wobei das stopfenförmige Element (13) mit einer Öffnung versehen ist, die sich durch das gesamte Element (13) erstreckt und wobei das Innengewinde auf der inneren Fläche der Öffnung durch das stopfenförmige Element (13) und das Außengewinde auf der äußeren Fläche der einstellbaren Vorrichtung (13) eine unterschiedliche Gewindesteigung aufweisen,
**dadurch gekennzeichnet, dass** die Endhalterung im ersten Element (10) eine erste Buchse (11) umfasst, die dazu eingerichtet ist, fest im ersten Element (10) angebracht zu sein, wobei die erste Buchse (11) mit einer Öffnung mit Innengewinde zur Aufnahme des Bolzens (12) mit Außengewinde ausgestattet ist, wobei die erste Halterung als Verriegelungshalterung dient.

2. System nach Anspruch 1, wobei das Teil (11'), das dazu vorgesehen ist, in der Öffnung des zweiten Elements (10') angeordnet zu sein, eine zweite Buchse umfasst, die fest in der Öffnung durch das zweite Element anzubringen ist, die eine Rotation unterbindet, wobei die zweite Buchse mit einer Öffnung versehen ist, die sich durch ihre gesamte Länge erstreckt, wobei die Oberfläche der Öffnung durch die zweite Buchse mit einem Innengewinde versehen ist, die zur drehbaren Wechselwirkung einer Interaktionsfläche mit dem stopfenförmigen Element (13) mittels einer Gewindeverbindung eingerichtet ist.

3. System nach Anspruch 1 oder 2, wobei der Durchmesser der Öffnung durch die erste Buchse (11) sich vom Durchmesser der Öffnung durch die zweite Buchse (11') unterscheidet, während der Außendurchmesser des stopfenförmigen Elements (13) dem Durchmesser der Öffnung durch die zweite Buchse (11') entspricht.

4. System nach einem der Ansprüche 1 bis 3, wobei der Durchmesser der Öffnung durch die erste Buchse (11) dem Durchmesser der Öffnung durch das stopfenförmige Element (13) und des Bolzens (12) entspricht.

5. System nach einem der Ansprüche 1 bis 4, wobei sich die Gewindesteigung des Innengewindes in der Öffnung durch die zweite Buchse (11') von der Gewindesteigung des Innengewindes in der Öffnung der ersten Buchse (11) unterscheidet.

6. System nach einem der Ansprüche 1 bis 5, wobei die Gewindesteigung des Gewindes in der Öffnung durch die zweite Buchse (11') der Gewindesteigung des Außengewindes auf der äußeren Fläche des stopfenförmigen Elements (13) entspricht, während die Gewindesteigung des Innengewindes in der Öffnung durch das stopfenförmige Element (13) der des Innengewindes der Öffnung in der ersten Buchse (11) und des Außengewindes am Bolzen (12) entspricht.

7. System nach einem der Ansprüche 1 bis 6, wobei die Länge des stopfenförmigen Elements (13) kleiner als die Länge der zweiten Buchse (11') ist.

8. System nach einem der Ansprüche 1 bis 7, wobei die Länge des Bolzens (12) größer als die Länge der zweiten Buchse (11') ist.

9. System nach einem der Ansprüche 1 bis 8, wobei die äußere Fläche der ersten und/oder der zweiten Buchse mit einem Gewinde oder mit Rippen oder dergleichen ausgestattet ist, um eine Befestigung der Buchse(n) innerhalb der Gegenstände, in denen sie zur Befestigung vorgesehen sind, zu bilden und dadurch eine Rotation der Buchse(n) innerhalb der Öffnung zu verhindern.

10. System nach einem der Ansprüche 1 bis 9, wobei die Öffnung oder die Bohrung der ersten Buchse ein Sackloch sein kann.

11. Verwendung eines Systems nach einem der Ansprüche 1 bis 10, wobei das System verwendet wird, um zwei oder mehr Elemente verriegelnd aneinander zu befestigen, wobei die erste Buchse in einem der Elemente angebracht ist und die zweite Buchse in einem zweiten Element angebracht ist, wobei das zweite Element mit einer Öffnung versehen ist, die sich durch das gesamte Element hindurch erstreckt.

12. Verfahren zum Zusammenfügen eines ersten Elements (10) und eines zweiten Elements (10') mittels Schraubverbindungen mit Außengewinde- und Innengewindeelementen, umfassend Teile (11, 11'), die dazu vorgesehen sind, in die Elemente (10, 10') eingebaut zu werden, wobei zumindest eines der zu verbindenden Elemente (10, 10') mit einer Öffnung versehen ist,
**gekennzeichnet durch**
- Anordnen einer Buchse (11) mit einer Öffnung mit Innengewinde in einer Öffnung im zu verbindenden ersten Element (10);
- Anordnen einer Buchse (11') mit einer Öffnung mit Innengewinde in einer Öffnung im zweiten Element (10');
- Einschrauben eines stopfenförmigen Elements (13) mit einem Außengewinde in die Buchse (11'), wobei das stopfenförmige Element (13) auch mit einer Öffnung mit Innengewinde versehen ist;
- Verwenden eines Bolzens (12) mit einem Außengewinde, das dem Innengewinde der Buchse (11) und dem Innengewinde des stopfenförmigen Elements (13) entspricht;
- Ausbilden des Innengewindes des stopfenförmigen Elements (13) und folglich des Außengewindes des Bolzens (12) mit einer Gewindesteigung, die sich von der des Außengewindes des stopfenförmigen Elements (13) und folglich des Innengewindes der Buchse (11') unterscheidet; und
- Herstellen einer Schraubverbindung mittels des Bolzens (12), der durch die Öffnung mit Innengewinde des stopfenförmigen Elements (13) und in die Buchse (11) geschraubt wird;
wodurch eine einstellbare Verbindung zwischen dem ersten Element (10) und dem zweiten Element (10') durch Einschrauben des Bolzens (12) hergestellt wird und/oder das Verstellen des Bolzens (12) und/oder des stopfenförmigen Elements (13) in eine Richtung eine Spannung in den Bolzen (12) einleitet.

## Revendications

1. Système destiné à assembler un premier élément (10) et un second élément (10') à l'aide de pièces mâles et femelles filetées, comprenant une tige (12) avec des filetages mâles, une pièce (11') destinée à être placée dans un orifice s'étendant à travers le second élément (10'), la pièce (11') étant pourvue d'un orifice avec une surface intérieure s'étendant à travers la pièce (11'), la surface intérieure étant pourvue de filetages femelles, et une unité en forme de bouchon (13) pourvue d'un orifice avec une surface intérieure pourvue de filetages femelles et une surface extérieure pourvue de filetages mâles, dans lequel le premier élément (10) est pourvu d'un élément terminal (11') une extrémité de la tige (12) est configurée avec une pièce terminale destinée à être fixée dans l'élément terminal (11') du premier élément (10), l'unité en forme de bouchon (13) étant pourvue d'un orifice s'étendant à travers toute l'unité (13) et où les filetages femelles sur la surface intérieure de l'orifice traversant l'unité en forme de bouchon (13) et les filetages mâles sur la surface extérieure du dispositif réglable (13) ont des pas différents,
**caractérisé en ce que** l'élément terminal dans le premier élément (10) comprend un premier manchon (11) configuré pour être monté de manière fixe dans un premier élément (10), le premier manchon (11) étant pourvu d'un orifice avec des filetages femelles pour la réception de la tige (12) avec les filetages mâles, le premier élément servant d'élément de verrouillage.

2. Système selon la revendication 1, **caractérisé en ce que** l'élément (11') destiné à être placé dans l'orifice dans le second élément (10') comprend un second manchon destiné à être monté de manière fixe dans l'orifice traversant le second élément, empêchant ainsi la rotation, le second manchon étant pourvu d'un orifice s'étendant à travers toute sa longueur, la surface de l'orifice traversant le second manchon étant pourvue de filetages femelles, configurée pour une interaction en rotation avec une surface d'interaction avec l'unité en forme de bouchon (13) par une connexion filetée.

3. Système selon la revendication 1 ou 2, **caractérisé en ce que** le diamètre de l'orifice traversant le premier manchon (11) est différent du diamètre de l'orifice traversant le second manchon (11') tandis que le diamètre extérieur de l'unité en forme de bouchon (13) correspond au diamètre de l'orifice traversant le second manchon (11').

4. Système selon l'une quelconque des revendications 1 à 3, **caractérisé en ce que** le diamètre de l'orifice traversant le premier manchon (11) correspond au diamètre de l'orifice traversant l'unité en forme de bouchon (13) et la tige (12).

5. Système selon l'une quelconque des revendications 1 à 4, **caractérisé en ce que** le pas des filetages femelles dans l'orifice traversant le second manchon (11') est différent du pas des filetages femelles dans l'orifice du premier manchon (11) .

6. Système selon l'une quelconque des revendications 1 à 5, **caractérisé en ce que** le pas des filetages dans l'orifice traversant le second manchon (11') correspond au pas des filetages mâles sur la surface extérieure de l'unité en forme de bouchon (13), tandis que le pas des filetages femelles dans l'orifice traversant l'unité en forme de bouchon (13) correspond aux filetages femelles de l'orifice dans le premier manchon (11) et aux filetages externes sur la tige (12) .

7. Système selon l'une quelconque des revendications 1 à 6, **caractérisé en ce que** la longueur de l'unité en forme de bouchon (13) est inférieure à la longueur du second manchon (11').

8. Système selon l'une quelconque des revendications 1 à 7, **caractérisé en ce que** la longueur de la tige (12) est supérieure à la longueur du second manchon (11').

9. Système selon l'une quelconque des revendications 1 à 8, **caractérisé en ce que** la surface extérieure du premier et/ou second manchon est pourvue de filetages ou ergots ou similaires afin de former une fixation du ou des dits manchons à l'intérieur des objets dans lesquels ils sont destinés à être montés, empêchant ainsi toute rotation du ou des dits manchons à l'intérieur de l'orifice.

10. Système selon l'une quelconque des revendications 1 à 9, **caractérisé en ce que** l'orifice ou alésage pour le premier manchon peut être un trou borgne.

11. Utilisation d'un système selon l'une quelconque des revendications 1 à 10, **caractérisée en ce que** le système est utilisé pour fixer de manière verrouillée deux ou plusieurs éléments les uns aux autres, où le premier manchon est monté dans l'un desdits éléments et le second manchon est monté dans un second élément, le second élément étant pourvu d'un orifice s'étendant à travers tout l'élément.

12. Procédé destiné à assembler un premier élément (10) et un second élément (10') au moyen de connexions filetées à l'aide de pièces mâles et femelles filetées, comprenant des pièces (11, 11') destinées à être intégrées dans les éléments (10, 10'), où au moins l'un des éléments (10, 10') à assembler est pourvu d'un orifice,
**caractérisé en ce qu'**il consiste à
- agencer un manchon (11) muni d'un orifice avec des filetages femelles dans un orifice dans le premier élément (10) à assembler,
- agencer un manchon (11') muni d'un orifice avec des filetages femelles dans un orifice dans le second élément (10'),
- visser une unité en forme de bouchon (13) avec des filetages mâles dans le manchon (11'), l'unité en forme de bouchon (13) étant également pourvue d'un orifice avec des filetages femelles,
- utiliser une tige (12) avec des filetages mâles correspondant aux filetages femelles du manchon (11) et aux filetages femelles de l'unité formant bouchon (13),
- attribuer aux filetages femelles de l'unité en forme de bouchon (13) et par conséquent aux filetages mâles de la tige (12) un pas différent des filetages mâles sur l'unité en forme de bouchon (13) et par conséquent des filetages femelles du manchon (11'), et
- établir une connexion filetée au moyen de la tige (12) vissée à travers l'orifice avec des filetages femelles de l'unité en forme de bouchon (13) et jusque dans le manchon (11),
d'où il s'ensuit qu'une connexion réglable entre le premier élément (10) et le second élément (10') est établie en vissant la tige (12) et/ou par réglage de la tige (12) et/ou l'unité en forme de bouchon (13) dans une direction introduisant une tension dans la tige (12).
